## Europäisches Patentamt
## European Patent Office
## Office européen des brevets

(19)

(11) Veröffentlichungsnummer: **0 192 842 B1**

(12) # EUROPÄISCHE PATENTSCHRIFT

(45) Veröffentlichungstag der Patentschrift: **14.08.91**

(51) Int. Cl.5: **C25D 1/08**

(21) Anmeldenummer: **85115836.0**

(22) Anmeldetag: **12.12.85**

(54) **Freitragende Massverkörperung.**

(30) Priorität: **31.01.85 DE 3503144**

(43) Veröffentlichungstag der Anmeldung:
**03.09.86 Patentblatt 86/36**

(45) Bekanntmachung des Hinweises auf die
Patenterteilung:
**14.08.91 Patentblatt 91/33**

(84) Benannte Vertragsstaaten:
**AT CH DE FR GB IT LI NL SE**

(56) Entgegenhaltungen:
**FR-A- 1 572 547**
**US-A- 1 793 483**
**US-A- 2 250 435**

(73) Patentinhaber: **Dr. Johannes Heidenhain
GmbH**
**Dr.-Johannes-Heidenhain-Strasse 5 Postfach
1260**
**W-8225 Traunreut(DE)**

(72) Erfinder: **Kraus, Heinz**
**Traunring 74e**
**W-8225 Traunreut(DE)**

## Beschreibung

Die Erfindung betrifft einen Teilungsträger gemäß dem Oberbegriff des Anspruchs 1.

Die Verwendung galvanoplastisch hergestellter Gitterteilungen bei lichtelektrischen Drehgebern ist bereits bekannt (Industrie-Anzeiger 88, 1966, Nr. 67, S.1497-1498). Der Querschnitt dieser Teilungsträger ist dabei durchgehend plan.

Die Gitterkonstante, Kantenschärfe etc. einer galvanoplastisch hergestellten Gitterteilung wird bekanntlich begrenzt durch das Auflösevermögen des Fotoresists. Zudem ist die Stärke des Teilungsträgers begrenzt durch die Resiststärke, wobei Resiststärke und Resistauflösung so korrelieren, daß zunehmende Stärke abnehmende Auflösung bedingt. Mit abnehmender stärke sinkt aber die Stabilität eines ebenen Galvano-Formteiles.

Aus der US-A 1 793 483 ist eine galvanoplastisch hergestellte Membran bekannt, deren Querschnittsprofil Vertiefungen und Erhebungen aufweist. Die Ausbildung einer freitragenden Maßverkörperung mit einem planen Perforationsbereich ist nicht erwähnt.

Der Erfindung liegt die Aufgabe zugrunde, eine auf galvanoplastischem Weg hergestellte, dünne freitragende Maßverkörperung mit präzisen Perforationen, hoher Kantenschärfe und kleiner Gitterkonstante anzugeben, die eine hohe mechanische Stabilität aufweist.

Diese Aufgabe wird durch die Merkmale des Anspruches 1 gelöst.

Die mit der Erfindung erzielten Vorteile bestehen insbesondere darin, daß eine Maßverkörperung in Form einer dünnen Metallfolie hoher Formstabilität vorliegt. Das Auflösungsvermögen des Fotoresists kann weitgehend ausgenutzt werden. Ein nach dem Erfindungsgedanken ausgestalteter sehr dünner scheibenförmiger Teilungsträger mit geringer Masse und hoher Formstabilität eignet sich besonders zum Einsatz in Drehgebern.

Ausführungsbeispiele der Erfindung werden anhand der Zeichnungen näher erläutert.

Es zeigen

Figur 1a bis 1d

Schritte zur Herstellung einer Teilscheibe;

Figur 2

eine vorteilhafte Formgebung einer Teilscheibe.

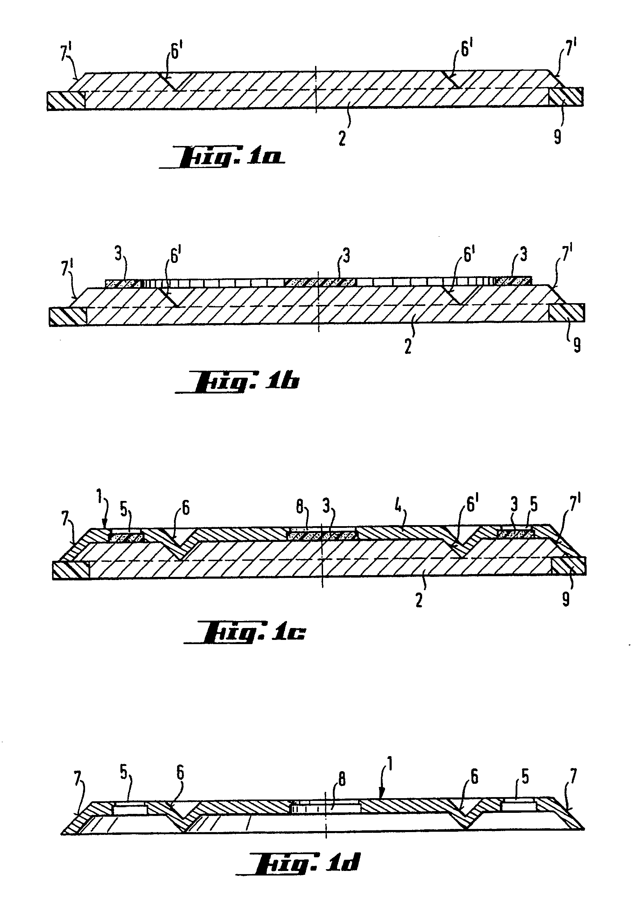

In Figur 1a bis 1d wird ein bekanntes Verfahren zur Herstellung einer nach dem Erfindungsgedanken ausgestalteten Teilscheibe 1 aufgezeigt. Ein als Matrize dienender elektrisch leitender Grundkörper 2 wird stellenweise mit einer elektrisch isolierenlen Schicht 3 bedeckt. Auf dem von der Isolierschicht 3 freigebliebenen Teil des Grundkörpers 2 wird ein Metallüberzug 4 niedergeschlagen, dessen Stärke nur geringfügig größer sein darf als die Stärke der isolierenden Schicht 3, um insbesondere eine hohe Kantenschärfe zu erzielen.

Um bei der dünnen freitragenden Teilscheibe 1 die benötigte mechanische Stabilität zu erzielen, wird in den Grundkörper 2 eine Vertiefung in Form einer umlaufenden Nut 6'eingebracht, und der Rand des Grundkörpers 2 erhält eine Abschrägung 7'.

Der galvanoplastische Niederschlag eines Metalles 4 erfolgt über die gesamte, von Isolierstoff 3 nicht bedeckte Formoberfläche des Grundkörpers 2 gleichmäßig. Das heißt in nahezu gleicher Stärke, homogen und spannungsfrei. Perforation 5, Zentrierbohrung 8 und Formversteifung in Form einer Sicke 6 und Abschrägung 7 können in einem Arbeitsgang hergestellt werden. Ein nichtleitender umlaufender Ring 9 dient zur definierten Randausbildung der Teilscheibe 1 und kann zum Abheben dieser Scheibe 1 vom Grundkörper 2 herangezogen werden.

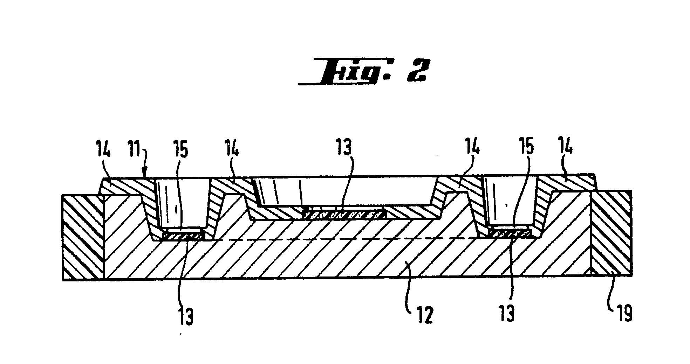

Bei wie in Figur 2 ausgebildetem Grundkörper 12 kann auch der Effekt ausgenutzt werden, daß an Erhebungen eine höhere Stromdichte zu einem dickeren und stabileren Metallniederschlag 14 führt. Die teilungsbildenden Bereiche 15 müssen dementsprechend in Vertiefungen liegen. Die mit Isolierstoff 13 bedeckten Flächen für eine Zentrierbohrung und eine Teilung liegen im gezeigten Beispiel in zwei Ebenen. Ein nichtleitender Ring 19 kann auch hier zum Abheben der Teilscheibe 11 vom Grundkörper 12 dienen. Die Stärke des Metallniederschlages 14 und somit auch die Konturenausformung des teilungsbildenden Bereiches 15 und die Stabilität der Teilscheibe 11 wird dadurch weiterhin von der Formgebung des Grundkörpers 12 bestimmt.

Als Perforation der erfindungsgemäßen Ausführung werden die schlitzförmigen Ausnehmungen einer Maßverkörperung definiert, die die Gitterteilung bilden.

## Patentansprüche

1. Freitragenden Scheibenförmiger Teilungsträger eines Drehgebers in Form einer galvanoplastisch hergestellten Metallfolie mit feinen Perforationen die die Gitterteilung bilden, dadurch gekennzeichnet, daß die Metallfolie (1,11) durch umlaufende Sicken (6) und/oder kragenförmige Ausbildungen (7) versteift ist und somit gegenüber dem planen Perforationsbereich (5,15) Vertiefungen (6,7) und/oder Erhebungen aufweist.

2. Teilungsträger nach Anspruch 1, dadurch gekennzeichnet, daß die Metallfolie (11) in den die Versteifungen bewirkenden Flächenbereichen dicker ist als in den die Perforation (15) aufweisenden Flächenbereichen.

Claims

1.  Self-supporting disc-shaped scale carrier for a rotary transducer in the form of an electrolytically produced metal foil with fine perforations, which form the grating scale, characterized in that the metal foil (1, 11) is stiffened by circumferential beads (6) and/or collar-shaped formations (7) and thus has depressions (6, 7) and/or protuberances relative to the flat perforation region (5, 15).

2.  Scale carrier according to claim 1, characterized in that the metal foil (11) is thicker in the surface regions forming the stiffenings than in the surface regions having the perforations (15).

Revendications

1.  Support de graduations en forme de disque en porte-à-faux d'un capteur de rotation se présentant sous la forme d'une feuille de métal produite par procédé galvanoplastique, munie de perforations fines qui constituent la graduation de réseau, caractérisé en ce que la feuille de métal (1, 11) est rigidifiée par des rainures (6) et/ou des formes (7) de collet et présente ainsi des creux et/ou des saillies (6, 7) par rapport à la zone des perforations (5, 15) plane.

2.  Support de graduations selon la revendication 1, caractérisé en ce que l'épaisseur de la feuille de métal (11) est plus importante dans les zones de la surface formant les raidisseurs que dans les zones de la surface comportant les perforations (15).

Fig. 1a

Fig. 1b

Fig. 1c

Fig. 1d

# Fig. 2